Europäisches Patentamt

European Patent Office

Office européen des brevets

(11) Publication number: **0 269 313**
**A1**

## (12) EUROPEAN PATENT APPLICATION

(21) Application number: 87309957.6

(22) Date of filing: 11.11.87

(51) Int. Cl.⁴ **B21D 39/20** , B60T 11/16

(30) Priority: 19.11.86 GB 8627678

(43) Date of publication of application:
01.06.88 Bulletin 88/22

(84) Designated Contracting States:
DE ES FR GB IT

(71) Applicant: LUCAS INDUSTRIES public limited
company
Great King Street
Birmingham, B19 2XF West Midlands(GB)

(72) Inventor: Basnett, Michael Neil 11 Derwen
Fawr
Llanbedr Road Crickhowell
Powys Wales(GB)

(74) Representative: Waite, Anthony William et al
MARKS & CLERK Alpha Tower Suffolk Street
Queensway
Birmingham B1 1TT(GB)

(54) **Pressure cylinder port attachment.**

(57) A hollow port component (8) is attached to an aperture (10) of a cylinder (1) by providing the component (8) with an end portion (12) of reduced internal cross-section, passing the component through the aperture to a position in which its free end projects beyond the aperture and, whilst supporting the component against axial displacement in one direction, forcing a mandrel (15) through said end portion to expand the component against an adjacent surface of the cylinder and thereby lock the component axially in one direction. The component may be fixed directly to the cylinder wall or to an end closure plug component (5) secured to the cylinder.

FIG.3.

FIG.4.

EP 0 269 313 A1

# PRESSURE CYLINDER PORT ATTACHMENT.

This invention relates to a pressure cylinder, primarily useful as a master or slave cylinder in a vehicle hydraulic braking system, and is particularly concerned with the attachment to a fabricated cylinder of a hollow port component to facilitate the connection to the cylinder of a reservoir or fluid conduit, for example.

The attachment of port components to fabricated pressure cylinders has conventionally been effected by welding. This is generally inconvenient, however, because the application of welding heat can result in bore distortion, giving rise to the necessity for corrective machining of the bore or scrapping of the cylinder. In another conventional proposal, a port is formed by boring and threading a sufficiently thick part of the cylinder, which may be a separate end closure member, but this is inconvenient in practice and excessively expensive, especially for the creation of low pressure port connections which are not subjected, in use, to high operating forces.

An object of the invention is to provide a convenient and inexpensive method of attaching a port component to a fabricated master cylinder primarily for use in a low pressure environment.

According to the invention, a method of attaching a hollow port component to a pressure cylinder comprises forming through part of the cylinder an aperture communicating with the cylinder interior and such as to receive an end portion of a tubular port component closely therein, said component having a part of reduced internal cross-section adjacent the free end of said end portion, passing the port component through said aperture to a position in which said free end projects beyond the aperture and supporting it against axial displacement in one direction, and forcing through said part of reduced internal cross-section in said one direction a mandrel of larger external cross-section than said internal cross-section such as to expand said component part outwardly against an adjacent surface of said cylinder part and thereby lock said tubular component part axially thereof in the opposite direction relative to the cylinder.

Typically, the aperture is formed through the cylinder wall and the tubular component secured directly to that wall.

Preferably, the tubular component is provided with an abutment, conveniently formed by reducing the diameter along at least part of the length of said end portion from the free end thereof to produce a shoulder, said shoulder being brought into engagement with a fixed surface of the assembly in order to support the port component axially in said one direction.

The cylinder may conveniently be a metal tube having a through bore of which one end is closed by an end member secured in position within the bore to close one end thereof, preferably by deforming part of the cylinder wall into a recess formed in the member. With such an arrangement, the port may be formed in part of the end member and the tubular component attached to the end member in communication with the port.

Included within the scope of the invention is a pressure cylinder to which a port has been connected using the aforesaid method.

The invention will now be described, by way of example, with reference to the accompanying drawings in which:-

Figure 1 illustrates, partly in cross-section, a portion of one form of pressure cylinder of the invention;

Figure 2 is a view similar to Figure 1 illustrating an alternative form of the pressure cylinder of the invention;

Figure 3 is a diagrammatic illustration of one stage in the method of the invention, indicating alternative possibilities for carrying out this stage, and

Figure 4 is a diagrammatic illustration of another stage in the method of the invention.

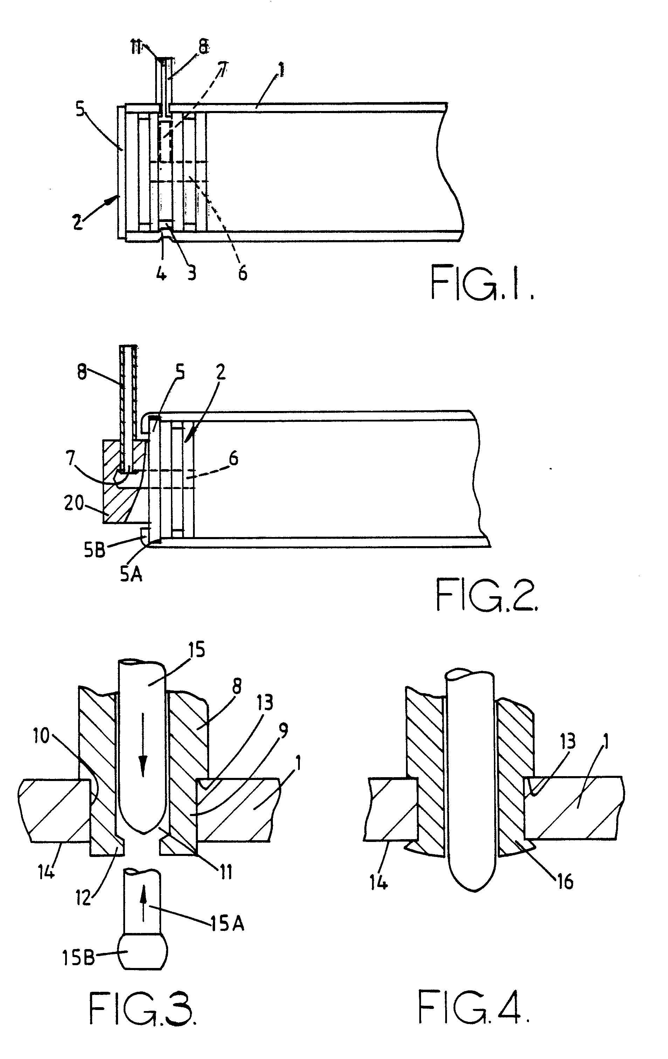

Referring to the drawings, Figure 1 illustrates part of a pressure cylinder 1, of which one end is closed by a closure member 2 which has a peripheral groove 3 and is locked in position axially by displacement of the cylinder wall into the groove at one or more locations, as illustrated at 4. The inward axial position of the closure member 2 is set by engagement of a head 5 of the closure member against the end of the cylinder 1. The closure member contains an axial passage 6 into which opens a radial passage 7 and the invention is concerned with the attachment to the cylinder 1 of a tubular port component 8 which will communicate with the passage 7 to permit fluid to flow into the cylinder from a reservoir or other supply source connected to the port component 8.

Figures 3 and 4 illustrate the manner in which the port component is secured to the cylinder using the method of the invention. An end portion 9 of the port component which is to be joined to the cylinder is of reduced external diameter such as to fit closely within an aperture 10 formed in the wall of the cylinder 1. The internal bore 11 of the port component is narrowed at its outer end by a peripheral inward protrusion 12. The length of the reduced diameter portion 9 is such that, with the port component inserted into the aperture to an extent limited by engagement of a shoulder 13 of the component with the outer surface of the cylinder 1, the reduced diameter portion 9 projects slightly beyond the internal surface 14 of the cylinder, as illustrated in Figure 3.

The next stage in the method is the passage through the port component bore 11 of a mandrel 15 of larger cross-section than the narrower bore portion defined by the inward protrusion 12. When the mandrel 15 is forced through this narrower bore portion from the remote external end of the tube, its engagement with the protrusion 12 causes the projecting end of the port component to be displaced radially so that part of it becomes lodged behind the internal surface 14 of the cylinder 1 and the port connection is then effectively locked to the cylinder 1 by the shoulder 13 engaging the outer cylinder surface and the displaced material 16 engaging the inner cylinder surface 14, as illustrated in Figure 4.

Figure 2 illustrates an alternative form of master cylinder in which the end member 2 is locked axially of the cylinder by engagement of the head 5 of the end member against a shoulder 5A formed towards the end of the cylinder and inwardly turning one or more portions 5B against the axially outwardly facing surface of the end member. The end member is provided with an axially projecting boss 20 into which an axial passage 6 extends to communicate with a radial passage 7 into which a port component 8 is to be secured. The actual attachment of the port component to the boss 20 is exactly as described in connection with Figures 3 and 4, except that the boss 20 is substituted for the wall of the cylinder 1.

In an arrangement in which it is possible to offer a mandrel to the inner end of the port component, the expansion operation can be carried out by pulling the mandrel through the component from said inner end, instead of pushing in the manner previously described. For this purpose, the mandrel would have a shank 15A (Figure 3) dimensioned to pass through the inward protrusion 12 and an enlarged head 15B sufficiently large to expand the projecting end of the port component 8 against the internal surface of the cylinder wall or end member when the mandrel is pulled through the port component from said inner end.

The invention can be seen to provide a convenient method of attaching a port connection to a cylinder which results in sufficient structural integrity at least for use in forming a low pressure connection, such as with a fluid reservoir, for example. The tubular component 8 may be readily attached to a flexible conduit by a suitable surrounding clamp, or other suitable means.

## Claims

1. A method of attaching a hollow port component to a pressure cylinder (1) characterised by the steps of forming through part of the cylinder an aperture (10) communicating with the cylinder interior and such as to receive an end portion (9) of a tubular port component (8) closely therein, said component having a part (12) of reduced internal cross-section adjacent the free end of said end portion, passing the port component through said aperture to a position in which said free end projects beyond the aperture and supporting it against axial displacement in one direction, and forcing through said part (12) of reduced internal cross-section in said one direction a mandrel (15) of larger external cross-section than said internal cross-section such as to expand said component part outwardly against an adjacent surface (14) of said cylinder part and thereby lock said tubular component part axially thereof in the opposite direction relative to the cylinder.

2. A method according to Claim 1 characterised in that the aperture (10) is formed through the cylinder wall and the tubular component (8) is secured directly to that wall.

3. A method according to Claim 1 or Claim 2 characterised in that the tubular component is provided with an abutment (13) which is brought into engagement with a fixed surface of the assembly in order to support the component axially in said one direction.

4. A method according to Claim 3 characterised in that the abutment is provided by reducing the diameter along at least part of the length of said end portion from the free end thereof to produce a shoulder (13).

5. A method according to any one of the preceding claims characterised in that the cylinder is a metal tube (1) having a through bore and including an end member (2) secured in position within the bore to close one end thereof, the end member having a passage (7) therein providing communication between the cylinder interior and said aperture (10).

6. A method according to any one of Claims 1 to 4 characterised in that the cylinder is a metal tube (1) having a through bore and including an end member (2) secured in position within the bore to close one end thereof, the aperture (10) being formed in part of the end member (2) and the tubular component (8) attached to the end member (2) in communication with the port.

7. A pressure cylinder characterised by a port component (8) attached thereto according to any one of the preceding claims.

FIG.1.

FIG.2.

FIG.3.

FIG.4.

European Patent Office

# EUROPEAN SEARCH REPORT

Application Number

EP 87 30 9957

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 122 848 (D.B.A) <br> * claim 1; figures 1-14 * | 1 | B 21 D 39/20 <br> B 60 T 11/16 |
| A | | 4 | |
| | --- | | |
| Y | GB-A-2 072 554 (SERCK INDUSTRIES) <br> * figures 1-4 * | 1 | |
| A | | 2,3 | |
| | --- | | |
| A | GB-A-2 090 550 (K. YAMAZAKI) | | |
| | --- | | |
| A | US-A-1 647 447 (HARTNETT) | | |
| | ----- | | |

TECHNICAL FIELDS SEARCHED (Int. Cl.4)

B 21 D 39/00
B 60 T 11/00

The present search report has been drawn up for all claims

| Place of search | Date of completion of the search | Examiner |
|---|---|---|
| BERLIN | 09-02-1988 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P0401)